# EUROPEAN PATENT APPLICATION

(11) **EP 1 748 406 A2**
(43) Date of publication of application: **31.01.2007**
(21) Application number: 06117744.0
(22) Date of filing: 24.07.2006
(51) Int. Cl.: G09G 3/20

(54) **Display apparatus**

(30) Priority: 25.07.2005 KR 20050067519
(71) Applicant: Samsung Electronics Co., Ltd., Suwon-si, Gyeonggi-Do (KR)
(72) Inventor: Jo, Gye-wook Neulpureun Byoksan Apt., Suwon-si Gyeonggi-do (KR)
(74) Representative: Perkins, Dawn Elizabeth

(57) **Abstract**

A display apparatus includes an image signal converting part to convert image signals received from an external source into six-color image signals of different colors, a thin film transistor substrate on which pixels are provided, each of the pixels being defined by an intersection of a gate line and a data line and provided with six-color sub-pixels, and a drive circuit part to drive the thin film transistor substrate. Accordingly, the display apparatus has an improved color reproduction.

## Description

The present invention relates to a display apparatus, and more particularly, to a display apparatus provided with six-color pixels.

Recently, flat display devices, such as an LCD (liquid crystal display), a PDP (plasma display panel), an OLED (organic light emitting diode) and the like, have gained widespread popularity and are replacing conventional CRTs (cathode ray tubes).

Among these flat display devices, the LCD includes a liquid crystal panel having a thin film transistor substrate, a color filter substrate, and a liquid crystal layer interposed between the both substrates. Since the LCD is a non-light-emitting device, a back light unit for supplying light should be disposed adjacent to a rear surface of the thin film transistor substrate. Transmittance of the light emitted from the back light unit is adjusted according to an arrangement state of liquid crystal molecules. The liquid crystal panel and the back light unit are housed in an outer frame.

Further, the LCD includes a plurality of thin film transistors (TFTs) provided on an OLED substrate for driving the OLED. Anode electrodes for forming pixels and a cathode electrode acting as a reference voltage are formed on the thin film transistors. When a voltage is applied between the cathode and anode electrodes, holes and electrons combine to form excitons. Then, relaxation of the excitons from an excited state to a ground state occurs in a light-emitting layer interposed between both the cathode and anode electrodes, thereby causing emission of light. The OLED adjusts the emitted light to display images.

As described above, the LCD and the OLED include the thin film transistors (TFTs) and pixel electrodes for applying voltages transferred from the TFTs, and conventionally use three primary colors of red, green, and blue to display images. However, when only three primary colors of red, green, and blue are used to display the images, there are drawbacks in that color expression for complementary colors of the three primary colors and color reproducibility are limited.

Accordingly, the present invention provides a display apparatus with an improved color reproduction.

Additional aspects of the present invention will be set forth in part in the description which follows and, in part, will be obvious from the description, or may be learned by practice of the invention.

The foregoing and/or other aspects of the present invention can be achieved by providing a display apparatus, comprising an image signal converting part to convert image signals received from an external source into six-color image signals of different colors, a thin film transistor substrate on which pixels are provided, each of the pixels being defined by an intersection of a gate line and a data line and provided with six-color sub-pixels, and a drive circuit part to drive the thin film transistor substrate.

The drive circuit part comprises a drive voltage generator to generate a gate-ON voltage, a gray scale voltage generator to generate a plurality of gray scale voltages, a gate driver to apply the gate-ON voltage to the gate line, a data driver to receive the gray scale voltages from the gray scale voltage generator and to apply the six-color image signals to the sub-pixels, and a timing controller to control the gate driver and the data driver.

The six-color sub-pixels may include red, green, blue, cyan, magenta, and yellow sub-pixels.

The six-color sub-pixels may be arranged in a line.

The display apparatus may further comprise a liquid crystal layer disposed on the thin film transistor substrate, and a color filter substrate disposed on the liquid crystal layer in which six-color color filters of different colors are provided.

The display apparatus may further comprise black matrixes provided between the color filters.

The display apparatus may further comprise: a light source disposed adjacent to a rear surface of the thin film transistor substrate to supply light to the pixels, and a light control member interposed between the thin film transistor substrate and the light source.

The light source may be provided across an entire rear surface of the thin film transistor substrate.

The light source may be provided on at least one side portion of the rear surface of the thin film transistor substrate.

The light source may be at least one of a lamp and a light emitting diode.

The display apparatus may further comprise a light-emitting layer provided on the pixels.

The display apparatus may further comprise a cathode electrode provided on the light-emitting layer.

At least one of a hole injection layer and a hole transport layer may be provided between the pixels and the light emitting layer.

At least one of an electron injection layer and an electron transport layer may be provided between the light emitting layer and the cathode electrode layer.

The foregoing and/or other aspects of the present invention can be achieved by providing a display apparatus, comprising a display panel having an array of pixels, each pixel having more than three sub-pixels associated with different colors, a drive circuit part to drive each of the pixels in the liquid crystal panel according to one or more control signals, and an image signal converting part to receive three-color image signals, to convert the three-color image signals to six color image signals, and to provide the six-color image signals to the drive circuit part.

The display panel may comprise a liquid crystal panel.

The three-color image signals may comprise red, green, and blue image signals, and the six-color image signals comprise second red, second green, second blue, cyan, magenta, and black image signals.

The image signal converting part may convert the three-color image signals to the six-color image signals by decomposing the three-color image signals into color components that correspond to the six-color image signals using corresponding scaling factors.

The drive circuit part may receive more than three color signals associated with the different colors and one or more input control signals, generates a pixel ON voltage and a pixel OFF voltage to control each sub-pixel of the pixels in the array, generates data signals to be applied to sub-pixels in selected pixels that are to be powered ON during a frame according to the received more than three color signals and the one or more input control signals, and applies the data signals to the sub-pixels in the selected pixels.

The liquid crystal panel may comprise a thin film transistor substrate to define the array of pixels each including more than three sub-pixels of each pixel; a liquid crystal layer disposed on the thin film transistor substrate and having a plurality of liquid crystal molecules; and a color filter layer disposed on the liquid crystal layer having more than three color filters to correspond to the different colors.

Each of the more than three sub-pixels in each pixel may comprise an upper electrode disposed between the color filter layer and the liquid crystal layer; and a lower electrode disposed between the thin film transistor substrate and the liquid crystal layer such that the upper and lower electrodes apply a voltage across the liquid crystal layer in the corresponding sub-pixel.

The liquid crystal panel may further comprise a common electrode layer interposed between the liquid crystal layer and the color filter layer and having a plurality of common electrodes corresponding to each of the plurality of sub-pixels; and a gate layer interposed between the liquid crystal layer and the thin film transistor substrate layer and having a plurality of gate electrodes in each of the sub-pixels opposite to the common electrodes.

The thin film transistor substrate may comprise a plurality of transistors having a gate terminal, a source terminal, and a drain terminal disposed thereon in each of the sub-pixels; a plurality of data lines extending across the thin film transistor substrate to apply a data voltage to one of the source and drain terminals of each transistor; and a plurality of gate lines to select ones of the sub-pixels to turn on by applying a gate ON voltage to the corresponding gate terminals of the transistors.

The color filter layer may comprise more than three color filters and black matrices disposed therein and corresponding to the sub-pixels of the different colors.

The display apparatus may further comprise an outer frame to support the liquid crystal panel; and a backlight unit disposed in the outer frame at a rear side of the liquid crystal panel to emit light into the liquid crystal panel, the backlight unit including a light guide panel at the rear side of the liquid crystal panel and having a shape that corresponds to the liquid crystal panel, at least one lamp disposed adjacent to at least one end of light guide panel to emit light into the at least one end of the light guide panel, a diffusion plate disposed between the light guide panel and the liquid crystal panel to diffuse light from the light guide panel into the liquid crystal panel, and a reflection sheet disposed at a rear side of the light guide panel to reflect any light that propagates away from the liquid crystal panel back toward the liquid crystal panel.

The display panel may comprise an organic light emitting diode (OLED) panel, the OLED panel including: a substrate; an organic light emitting layer disposed on the substrate to emit light when one or more predetermined voltages are applied thereto and having portions that correspond to each of the more than three sub-pixels in each pixel; first electrodes disposed on the organic light emitting layer in each of the sub-pixels and being made of a transparent material; and second electrodes disposed between the substrate and the organic light emitting layer opposite the first electrodes such that the first and second electrodes apply the one or more predetermined voltages to each of the more than three sub-pixels of selected pixels.

The foregoing and/or other aspects of the present invention can be achieved by providing a display apparatus, comprising a substrate; a light emitting layer disposed on the substrate to emit light when one or more predetermined voltages are applied across the light emitting layer; first and second electrode layers disposed on opposite sides of the light emitting layer, the light emitting layer and the first and second electrode layers defining at least one pixel including a red sub-pixel to emit red light having a first corresponding pair of electrodes, a green sub-pixel to emit green light having a second corresponding pair of electrodes, a blue sub-pixel to emit blue light having a third corresponding pair of electrodes, a cyan sub-pixel to emit cyan light having a fourth corresponding pair of electrodes, a magenta sub-pixel to emit magenta light having a fifth corresponding pair of electrodes, and a black sub-pixel having a sixth corresponding pair of electrodes.

The foregoing and/or other aspects of the present invention can be achieved by providing a display apparatus, comprising a display panel having an array of pixels, each pixel having more than three sub-pixels associated with different colors; and an image signal converting part to receive three-color image signals, to convert the three-color image signals to more than three image signals, and to provide the more than three image signals to drive the display panel.

It is to be understood that both the foregoing general description and the following detailed description are exemplary and explanatory and are intended to provide further explanation of the invention as claimed.

These and/or other aspects of the prevent invention will become apparent and more readily appreciated from the following description of the embodiments, taken in conjunction with the accompany drawings, in which:
Figure 1 is a block diagram illustrating a liquid crystal display apparatus in accordance with an embodiment of the present invention;
Figure 2 illustrates a cross-sectional view of a liquid crystal panel of the liquid crystal display apparatus of Figure 1, according to an embodiment of the present invention;
Figure 3 illustrates a cross-sectional view of the liquid crystal display apparatus of Figure 1, according to an embodiment of the present invention; and
Figure 4 illustrates a cross-sectional view of a display apparatus according to another embodiment of the present invention.

Reference will now be made in detail to the embodiments of the present invention, examples of which are illustrated in the accompanying drawings, wherein like reference numerals refer to like elements throughout, and description thereof will be offered representatively in a first embodiment and omitted in later embodiments if any. The embodiments are described below so as to explain the present invention by referring to the figures.

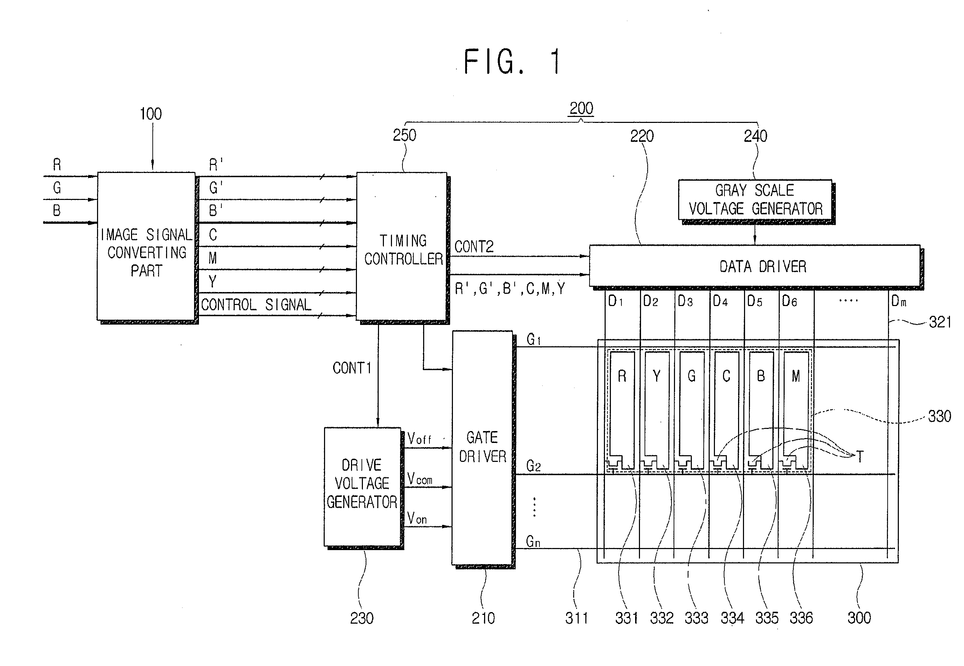

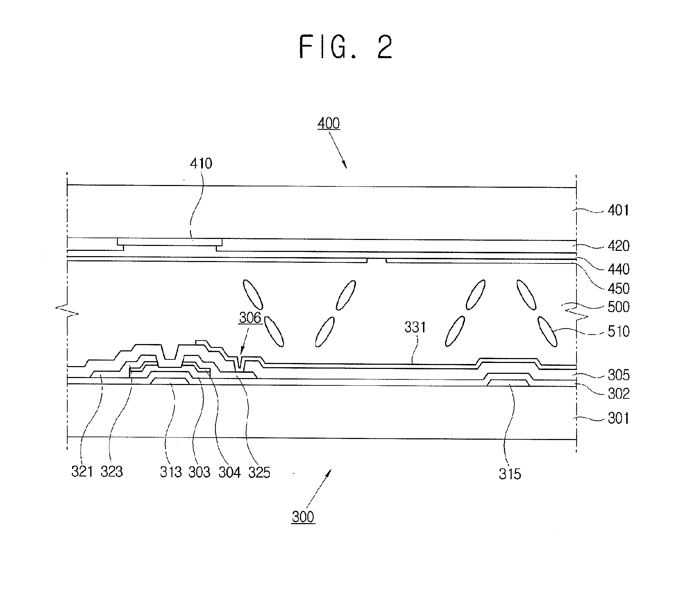

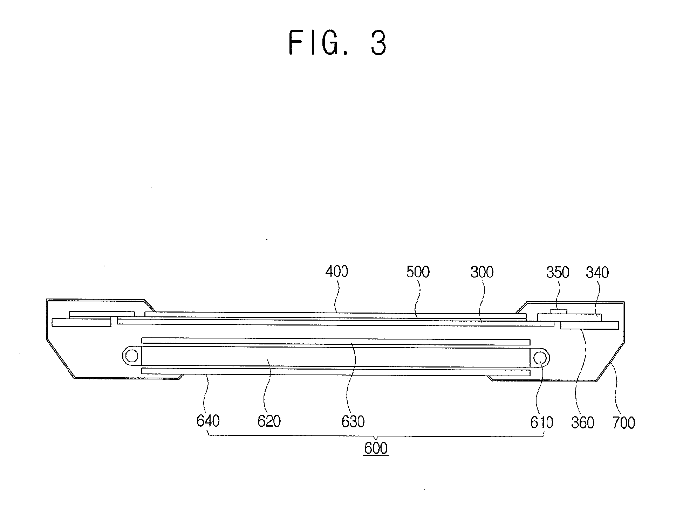

A liquid crystal display apparatus in accordance with an embodiment of the present invention will be described with reference to Figures 1 to 3. Figure 1 is a block diagram illustrating the liquid crystal display apparatus including a thin film transistor substrate 300 having pixels, an image signal converting part 100 and a drive circuit part 200. Figure 2 is a cross-sectional view illustrating a liquid crystal panel of the liquid crystal display apparatus Figure 1. Figure 3 is a cross-sectional view illustrating the liquid crystal display apparatus.

Referring to Figures 1 to 3, the liquid crystal display apparatus includes the liquid crystal panel which has the thin film transistor substrate 300, a color filter substrate 400 and a liquid crystal layer 500 interposed between the thin film transistor and color filter substrates 300 and 400, the drive circuit part 200 to drive the liquid crystal panel, and the image signal converting part 100 to convert image signals from an external source to six-color image signals.

Referring to Figures 1 and 2, the thin film transistor substrate 300 has a first insulating substrate 301 and gate wires 311, 313, and 315 formed on the first insulating substrate 301. The gate wires 311, 313, and 315 may be formed of a single metal layer or multiple metal layers. The gate wires 311, 313 and 315 include a plurality of gate lines 311 extending in a transverse direction, a plurality of gate electrodes 313 of TFTs (thin film transistors) T connected to the gate lines 311, and a plurality of common electrode lines 315 overlapping sub-pixels 331 to form storage capacitors.

Referring to Figure 2, a gate insulating layer 302 made of silicon nitride (SiNx) (and/or the like) covers the gate wires 311, 313, and 315 on the first insulating substrate 301.

A semiconductor layer 303 made of a semiconductor material, such as amorphous silicon or the like, is formed on the gate insulating layer 302. An ohmic contact layer 304 made of silicide or n+ hydrogenated amorphous silicon heavily doped with n-type impurities is formed on the semiconductor layer 303. The ohmic contact layer 304 is separated into two portions with respect to the corresponding gate electrode 313.

Data wires 321, 323, and 325 are formed on the ohmic contact layers 304. The data wires 321, 323, and 325 may also be formed of a single metal layer or multiple metal layers. The data wires 321, 323, and 325 include a plurality of data lines 321 extending in a longitudinal direction and intersecting the gate lines 311 through the TFTs T to form a plurality of pixels 330, a plurality of drain electrodes 323, each being branched from the data line 321 and extending onto one portion of the ohmic contact layer 304, and a plurality of source electrodes 325 of the TFTs T, each being formed on another portion of the ohmic contact layer 304, located opposite the drain electrode 323 with respect to the corresponding gate electrode 313 and being separated from the drain electrode 323.

A protective layer 305 is formed on the data wires 321, 323, and 325 and portions of the semiconductor layer 303, which are not covered by the data wires 321, 323, and 325. The protective layer 305 includes a nitride silicon layer, an a-Si:C:O layer, or an a-Si:C:F layer deposited by a plasma enhanced chemical vapor deposition (PECVD), an acryl based organic insulating layer, or the like. The protective layer 305 is provided with a plurality of contact holes 306 formed therein to expose the source electrodes 325 of the TFTs T.

Referring to Figures 1 and 2, the sub-pixels 331 are formed on the protective layer 305. The sub-pixels 331 may be formed of a transparent conductive material, such as ITO (indium tin oxide), IZO (indium zinc oxide) or the like.

Referring to Figure 1, the sub-pixels 331, 332, 333, 334, 335, and 336 are electrically connected to the TFTs T on the TFT substrate 300 to form one pixel 330, which is a dot (i.e., a unit in digital images). The sub-pixels 331 to 336 may include six-sub pixels arranged in a line parallel to a direction in which the gate lines 311 extend, and six different color voltages may be applied to the individual sub-pixels 331 to 336. Six colors thereof include red, green, blue, cyan, magenta, and yellow. Accordingly, the number of the sub-pixels can be increased from three to six to display one dot such that more of a variety of colors can be displayed as compared with when only the conventional colors red, green and blue are used.

In the present embodiment, the six-color sub-pixels 331 to 336 may be arranged in an order of red, yellow, green, cyan, blue, and magenta, however, it should be understood that other arrangements of the six-color sub-pixels may alternatively be used. Further, the six-color sub-pixels 331 to 336 can alternatively be arranged in an array of 2 X 3 or 3 X 2 instead of being arranged in a line. One of the six-color sub-pixels 331 to 336 may include a white sub-pixel to improve brightness. When the number of the sub-pixels is more than four or more than six, the white sub-pixel may be a transparent pixel to allow light components of a light source to pass through. The white sub-pixel may always generate a brightest gray scale level.

Referring to Figures 1 to 3, the liquid crystal panel further includes a liquid crystal layer 500 that covers the sub-pixels 331 to 336, and is interposed between the TFT substrate 300 and the color filter substrate 400. The color filter substrate 400 includes a plurality of black matrixes 410 formed on a second insulating substrate 401. The black matrixes 410 may define filters of red, yellow, green, cyan, blue and magenta, and may serve to block a direct light irradiation onto the TFTs T disposed on the thin film transistor substrate 300. The black matrixes 410 are made of a photosensitive organic material having a black pigment added thereto. The black pigment may be made of carbon black or titanium oxide.

A color filter layer 420 is provided with the red, yellow, green, cyan, blue, and magenta filters, which are formed alternatingly between the black matrixes 410. The color filter layer 420 serves to impart color to a light irradiated from a light source (not shown) and then transmitted through the liquid crystal layer 500. The color filter layer 420 may be made of a photosensitive organic material.

An overcoat layer 440 is formed on the color filter layer 420 and portions of the black matrixes 410 which the color filter layer 420 does not cover. The overcoat layer 440 serves to planarize and protect the color filter layer 420 and may be made of an acryl based epoxy material.

A plurality of common electrodes of a common electrode layer 450 are formed on the overcoat layer 440. The common electrode layer 450 is made of a transparent conductive material, such as ITO (indium tin oxide), IZO (indium zinc oxide), or the like. The common electrode layer 450 applies voltages directly to the liquid crystal layer 500 together with the sub-pixels 331 to 336 of the thin film transistor substrate 300.

The liquid crystal layer 500 is disposed in a vertical alignment (VA) mode between the thin film transistor substrate 300 and the color filter substrate 400. In the vertical alignment (VA) mode, a long axis of liquid crystal molecules 510 therein is at right angles with respect (i.e., perpendicular) to the TFT substrate 300, unless a voltage is applied across the liquid crystal layer 500. When a voltage is applied, the liquid crystal molecules 510 are arranged such that their long axis lies orthogonal to the applied electric field (i.e., parallel to the TFT substrate 300), since the dielectric anisotropy of the liquid crystal molecules 510 is negative. The common electrode layer 450 and the sub-pixels 331 to 336 can have incision patterns formed therein. The incision patterns serve to generate a fringe field that determines an alignment orientation (or alignment direction) of the liquid crystal molecules 510, when the voltage is applied across the liquid crystal layer 500.

Referring to Figure 1, a gate driver 210 (i.e., a scan driver) is connected with the gate lines 311 to apply gate signals including combinations of gate-ON voltages Von and gate-OFF voltages Voff received from the drive voltage generator 230 thereto.

A data driver 220 (i.e., a source driver) is supplied with gray scale voltages from a gray scale voltage generator 240 and selects ones of the gray scale voltages according to a control of a timing controller 250 to apply data voltages to the data lines 321.

A plurality of gate driver integrated circuits (IC's) or data driver IC's can be attached to the liquid crystal panel through a tape carrier package (TCP; not shown), after being mounted thereon or directly attached to the first insulating substrate 301 (e.g., by a chip on glass mounting method). Alternatively, other types of circuits that perform the same functions as these IC's can be directly mounted on the liquid crystal panel.

Referring to Figures 1 and 2, the drive voltage generator 230 generates the gate-ON voltages Von to turn the TFTs T ON, the gate-OFF voltages Voff to turn the TFTs T OFF, and a common voltage Vcom applied to the common electrodes in the common electrode layer 450.

The gray scale voltage generator 240 generates the plurality of the gray scale voltages relating to a brightness of the LCD apparatus.

The timing controller 250 generates control signals to control performance of the gate driver 210, the data driver 220, the drive voltage generator 230, and the gray scale voltage generator 240 and supplies the control signals to the gate driver 210, the data driver 220, and the drive voltage generator 230, respectively.

The timing controller 250 is supplied with three-color image signals R, G, and B (e.g., the conventional three-color image signals) and input control signals to control a display thereof, such as a vertical synchronizing signal, a horizontal synchronizing signal, a main clock signal, and a data enable signal. An external graphic controller (not shown) may supply the timing controller 250 with these input signals. The timing controller 250 transmits a gate control signal CONT1 to the gate driver 210 and the drive voltage generator 230 according to the input control signals, and transmits six-color image signals R', G', B', C, M, and Y converted by the image signal converting part 100 and a data control signal CONT2 to the data driver 220. The image signals R', G', and B' are formed by converting the three-color image signals R, G, and B input from the external graphic controller, while the image signals C, M, and Y are newly generated by the image signal converting part 100.

The gate control signal CONT1 includes a vertical synchronization start signal to indicate a start of an output of a gate-ON pulse (gate-ON voltage interval), a gate clock signal to control an output timing of the gate-ON pulse, and a gate-ON enable signal to limit a width of the gate-ON pulse.

The data control signal CONT2 includes a horizontal synchronization start signal to indicate a start of an input of the six-color image signals R', G', B', C, M, and Y and a load signal to instruct the data driver 220 to apply corresponding voltages to the data lines 321.

First, the gray scale voltage generator 240 supplies the data driver 220 with the gray scale voltages having voltage values that are determined according to voltage selection control signals.

The gate driver 210 applies the gate-ON voltages Von sequentially to the gate lines 311 according to the gate control signals CONT1 from the timing controller 250 to turn ON the TFTs T that are connected to the gate lines 311.

At the same time, the data driver 220 receives the six-color image signals R', G', B', C, M, and Y that correspond to the sub-pixels 331 to 336 that are connected to the TFTs T that are turned ON and the data control signals CONT2 from the timing controller 250, and selects the gray scale voltages that correspond to the individual six-color image signals R', G', B', C, M, and Y among the gray scale voltages from the gray scale voltage generator 240 such that the data driver 220 converts the image signals R', G', B', C, M, and Y into corresponding data voltages to be applied to the data lines 321.

The data voltages (i.e., data signals) supplied to the data lines 321 are applied to the corresponding sub-pixels 331 to 336 through the TFTs T that are turned ON. In a similar manner, the gate-ON voltages are applied sequentially to all the gate lines 311 during the one frame such that the data signals are applied to all sub-pixels 331 to 336.

The image signal converting part 100 converts the three-color image signals R, G, and B input from the external graphic controller into the six-color image signals R', G', B', C, M, and Y of red, green, blue, cyan, magenta, and yellow. The image signal converting part 100 is provided with logic embedded therein that performs calculations to convert the image signals. The method of converting the image signals (i.e., the three-color image signals R, G, and B to the six-color image signals R', G', B', C, M, and Y) includes a color mixing method in which the three-color image signals (e.g., the conventional three-color image signals) are mixed to be converted into a cyan image signal C, a magenta image signal M, and a yellow image signal Y, and a solid color method in which the three-color image signals are converted into solid color cyan C, magenta M, and yellow Y image signals instead of mixing colors. In the both methods, the six-color image signals are all used together to create a white signal to obtain a maximum brightness.

The color mixing method of the aforementioned methods will be briefly described as follows. The three-color image signals R, G, and B are classified according to their respective magnitudes into three categories: a maximum magnitude, a medium magnitude, and a minimum magnitude, where "magnitude" refers to a brightness or a gray scale of the image signal. Then, the image signals R, G, and B that are classified according to their respective magnitudes are decomposed into components of the six-color image signals R', G', B', C, M, and Y. Next, scaling factors are determined based on the three-color image signals R, G, and B and the decomposed six-color image signals R', G', B', C, M, and Y. The decomposed six-color image signals R', G', B', C, M, and Y are then multiplied by the scaling factors, whereby the converted six-color image signals R', G', B', C, M, and Y are obtained from the external image signals.

As illustrated in Figure 3, the liquid crystal display apparatus includes the liquid crystal panel having the thin film transistor substrate 300, the color filter substrate 400, and the liquid crystal layer 500 interposed between both the TFT and color filter substrates 300 and 400, a back light unit 600 disposed adjacent to a rear surface of the liquid crystal panel to supply light thereto, and an outer frame 700 to support and house the liquid crystal panel and the back light unit 600.

A sealant is provided between the thin film transistor substrate 300 and the color filter substrate 400. The sealant combines both the TFT and color filter substrates 300 and 400 while forming a cell gap therebetween, and the liquid crystal layer 500 is formed within the TFT and color filter substrates 300 and 400 and the sealant. The liquid crystal panel forms images by adjusting an alignment of the liquid crystal layer 500. However, since the liquid crystal panel is a non-light-emitting device, a light source, such as lamps 610 disposed adjacent to a rear surface thereof, may be used supply light thereto. A driving part to apply driving signals is provided on one side portion of the thin film transistor substrate 300. The driving part includes a flexible printed circuit board 340, a driving chip 350 mounted on the flexible printed circuit board 340, and a printed circuit board 360 connected to an outer end portion of the flexible printed circuit board 340. The driving part illustrated in Figure 3 may be made of a chip on film (COF) method.

A plurality of the lamps 610 may be disposed along both side portions of the rear surface of the liquid crystal panel, and a light guide panel 620 is disposed between the lamps 610 to guide light emitted therefrom to the liquid crystal panel. The back light unit 600 can be classified as (1) a direct type in which the lamps 610 are disposed across an entire rear surface of the liquid crystal panel to emit light into the liquid crystal panel, and (2) an edge type in which the light guide panel 620 is disposed behind the liquid crystal panel and at least one lamp is disposed adjacent to one side portion of the light guide panel 620 to emit the light through the light guide panel 620 to the liquid crystal panel. The back light unit 600 of the present embodiment is the edge type.

The lamps 610 of the present embodiment may be cold cathode fluorescent lamps (CCFL) and include a blue fluorescent material. In general, the lamps 610 include red, green, and blue fluorescent materials to emit white color light, and can be made of an external electrode fluorescent lamp (EEFL).

A diffusion plate 630 disposed adjacent to the rear surface of the liquid crystal panel diffuses light from the light source uniformly to supply the diffused light to the liquid crystal panel. Therefore, a brightness distribution of a screen can be uniform making the arrangement state of the light source on the screen unnoticeable.

A reflection sheet 640 is disposed behind the light guide panel 620 to reflect the light transmitted in a direction opposite to the liquid crystal panel, back to the liquid crystal panel to reduce a loss of the light and to contribute to improving uniformity of the light transmitted through the liquid crystal panel. The reflection sheet 640 can be made of, for example, polyethylene terephthalate (PET) or polycarbonate (PC).

Further, a light control member (not shown) can be provided between the liquid crystal panel and the diffusion plate 630 in order to control the light emitted from the lamp 610. For example, the light control member may include at least one of a prism film that collects diffused light in a direction perpendicular to a plane of the liquid crystal panel thereabove, a protective film that protects the prism film from scratches, and a reflective polarizing film to assist in improving the brightness of the liquid crystal panel through a repeated process of polarization transmission and reflection of the light. The light control member may be provided with diffusion patterns formed therein to improve diffusivity of the light.

In accordance with another embodiment of the present invention, the light source can include a light emitting diode (LED), instead of the lamps 610.

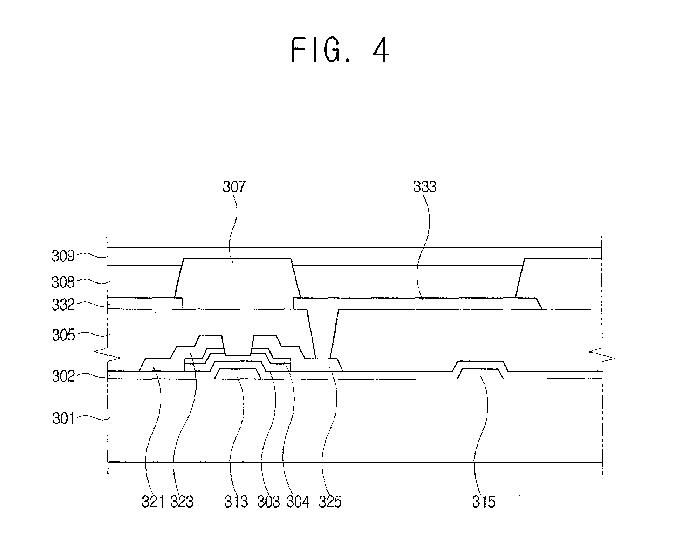

Figure 4 is a cross-sectional view illustrating a display apparatus in accordance with another embodiment of the present invention. As illustrated in Figure 4, TFTs T formed on a first insulating substrate 301, a protective layer 305, and sub-pixels 332 and 333 are similar in structure to the embodiment of Figure 2. The display apparatus of the present embodiment is an OLED (organic light emitting diode). Since some of the components of the embodiment of Figure 4 are similar to components of the present embodiment, only description of unlike components will be provided here.

The sub-pixels 332 and 333 are connected to source electrodes 325 through contact holes formed in the protective layer 305. The sub-pixels 332 and 333 act as an anode to supply holes to a light-emitting layer 308, and are made of a transparent conductive material, such as ITO (indium tin oxide), or IZO (indium zinc oxide).

A cathode electrode 309 is formed on the light-emitting layers 308, and may be made of a non-transparent material such as aluminum (Al) or silver (Ag). In the present embodiment, a metal with a low work function may be used in the cathode electrode 309 to facilitate electron injection into the light-emitting layer 308. However, a transparent material may alternatively be used similar to the sub-pixels 332 and 333. In this case, light may be emitted in both directions of the first insulating substrate 301 unlike the present embodiment in which generated light is emitted toward the first insulating substrate 301.

Isolating walls 307 made of an organic material are formed between the sub-pixels 332 and 333. The isolating walls 307prevent a short circuit between the sub-pixels 332 and 333 by isolating the individual sub-pixels 332 and 333.

The light-emitting layer 308 enclosed by the isolating walls 307 are disposed on the sub-pixels 332 and 333. The light-emitting layer 308 is made of an organic material which emits light according to a voltage applied thereto, and the light emitting layer 308 emits light of various colors that correspond to the individual sub-pixels 332 and 333. At least one of a hole injection layer and a hole transport layer may be provided between the sub-pixels 332 and 333, or between the light-emitting layers 308 and the cathode electrode 309.

Although not illustrated, the display apparatus can further include a second protective layer to protect the cathode electrode 309, and a packing member to prevent moisture and air from penetrating the light-emitting layer 308.

As described above, in accordance with the embodiments of the present invention, there is provided a display apparatus with an improved color reproduction.

Although a few exemplary embodiments of the present invention have been shown and described, it will be appreciated by those skilled in the art that changes may be made in these embodiments having six-color pixels without departing from the scope of the invention as defined in the appended claims.

## Claims

1. A display apparatus, comprising:
a display panel having an array of pixels (330), each pixel (330) having more than three sub-pixels (331, 332, 333, 334, 335, 336) associated with different colors; and
an image signal converting part (100) configured to receive three color image signals (R, G, B), to convert the three color image signals (R, G, B) to more than three color image signals (R', G', B', C, M, Y), and to provide the more than three color image signals (R', G', B', C, M, Y) to drive the display panel.

2. A display apparatus according to claim 1, wherein the image signal converting part (100) is configured to convert received image signals (R, G, B) into six color image signals (R', G', B', C, M, Y) of different colors;
and wherein the display panel comprises:
a thin film transistor substrate (300) on which pixels (330) are provided, each of the pixels (330) being defined by an intersection of a gate line (311) and a data line (321) and provided with six color sub-pixels (331, 332, 333, 334, 335, 336); and
a drive circuit part (200) configured to drive the thin film transistor substrate (300).

3. The display apparatus according to claim 2, wherein the drive circuit part (200) comprises:
a drive voltage generator (230) configured to supply a gate-ON voltage or a gate-OFF voltage;
a gray scale voltage generator (240) configured to generate a plurality of gray scale voltages;
a gate driver (210) configured to apply the gate-ON voltage or the gate-OFF voltage to each gate line (311);
a data driver (220) configured to receive the gray scale voltages from the gray scale voltage generator (240) and to apply the six color image signals (R', G', B', C, M, Y) to the sub-pixels (331, 332, 333, 334, 335, 336); and
a timing controller (250) configured to control the gate driver (210) and the data driver (220).

4. The display apparatus according to claim 2 or 3, wherein the six color sub-pixels (331, 332, 333, 334, 335, 336) include red, green, blue, cyan, magenta, and yellow sub-pixels (331, 332, 333, 334, 335, 336).

5. The display apparatus according to any one of claims 2 to 4, wherein the six color sub-pixels (331, 332, 333, 334, 335, 336) are arranged in a line.

6. The display apparatus according to any one of claims 2 to 6, further comprising:
a liquid crystal layer (500) disposed on the thin film transistor substrate (300); and
a color filter substrate (400) disposed on the liquid crystal layer (500) in which six color color filters (420) of different colors are provided.

7. The display apparatus according to claim 6, further comprising:
black matrixes (410) provided between the color filters (420).

8. The display apparatus according to any one of claims 2 to 7, further comprising:
a light source (610) disposed adjacent to a rear surface of the thin film transistor substrate (300) to supply light to the pixels (330); and
a light control member interposed between the thin film transistor substrate (300) and the light source (610).

9. The display apparatus according to claim 8, wherein the light source (610) is provided across an entire rear surface of the thin film transistor substrate (300).

10. The display apparatus according to claim 8, wherein the light source (610) is provided on at least one side portion of the rear surface of the thin film transistor substrate (300).

11. The display apparatus according to claim 8, wherein the light source is at least one of a lamp (610) and a light emitting diode.

12. The display apparatus according to any one of claims 2 to 7, further comprising:
a light-emitting layer (308) provided on the pixels (330).

13. The display apparatus according to claim 12, further comprising:
a cathode electrode (309) provided on the light-emitting layer (308).

14. The display apparatus according to claim 12 or 13, further comprising:
at least one of a hole injection layer and a hole transport layer provided between the pixels (330) and the light-emitting layer (308).

15. The display apparatus according to claim 13, further comprising:
at least one of an electron injection layer and an electron transport layer provided between the light-emitting layer (308) and the cathode electrode (309).

16. The display apparatus according to claim 1, further comprising:
a drive circuit part (200) to drive each of the pixels (330) in the display panel according to one or more control signals, and
wherein the image signal converting part (100) is configured to convert the three color image signals (R, G, B) to six color image signals (R', G', B', C, M, Y), and to provide the six color image signals (R', G', B', C, M, Y) to the drive circuit part (200).

17. The display apparatus according to claim 16, wherein the display panel comprises a liquid crystal panel.

18. The display apparatus according to claim 16 or 17, wherein the three color image signals (R, G. B) comprise red, green, and blue image signals, and the six color image signals (R', G', B', C, M, Y) comprise second red, second green, second blue, cyan, magenta, and black image signals.

19. The display apparatus according to any one of claims 16 to 18,, wherein the image signal converting part (100) converts the three-color image signals (R, G, B) to the six color image signals (R', G', B', C, M, Y) by decomposing the three color image signals (R, G, B) into color components that correspond to the six color image signals (R', G', B', C, M, Y) using corresponding scaling factors.

20. The display apparatus according to any one of claims 16 to 19, wherein the drive circuit part (200) receives more than three color signals associated with the different colors and one or more input control signals, generates a pixel ON voltage and a pixel OFF voltage to control each sub-pixel (331, 332, 333, 334, 335, 336) of the pixels (330) in the array, generates data signals (D₁, D₂, .... Dₘ) to be applied to sub-pixels (331, 332, 333, 334, 335, 336) in selected pixels (330) that are to be powered ON during a frame according to the received more than three color signals and the one or more input control signals, and applies the data signals (D₁, D₂, .... Dₘ) to the sub-pixels (331, 332, 333, 334, 335, 336) in the selected pixels (330).

21. The display apparatus according to claim 17, wherein the liquid crystal panel comprises:
a thin film transistor substrate (300) to define the array of pixels (330) each including more than three sub-pixels (331, 332, 333, 334, 335, 336) of each pixel (330);
a liquid crystal layer (500) disposed on the thin film transistor substrate (300) and having a plurality of liquid crystal molecules (510); and
a color filter layer (420) disposed on the liquid crystal layer (500) having more than three color filters to correspond to the different colors.

22. The display apparatus according to claim 21, wherein each of the more than three sub-pixels (331, 332, 333, 334, 335, 336) in each pixel (330) comprise:
an upper electrode (450) disposed between the color filter layer (420) and the liquid crystal layer (500); and
a lower electrode (323, 325) disposed between the thin film transistor substrate (300) and the liquid crystal layer (500) such that the upper and lower electrodes apply a voltage across the liquid crystal layer (500) in the corresponding sub-pixel.

23. The display apparatus according to claim 21, wherein the liquid crystal panel further comprises:
a common electrode layer (450) interposed between the liquid crystal layer (500) and the color filter layer (420) and having a plurality of common electrodes corresponding to each of the plurality of sub-pixels (331, 332, 333, 334, 335, 336); and
a gate layer interposed between the liquid crystal layer (500) and the thin film transistor substrate layer (300) and having a plurality of gate electrodes (313) in each of the sub-pixels opposite to the common electrodes (450).

24. The display apparatus according to claim 21, wherein the thin film transistor substrate (300) comprises:
a plurality of transistors (T) having a gate terminal (313), a source terminal (325), and a drain terminal (323) disposed thereon in each of the sub-pixels (331, 332, 333, 334, 335, 336);
a plurality of data lines (321) extending across the thin film transistor substrate (300) to apply a data voltage to one of the source and drain terminals (323, 325) of each transistor (T); and
a plurality of gate lines (311) to select ones of the sub-pixels (331, 332, 333, 334, 335, 336) to turn on by applying a gate ON voltage to the corresponding gate terminals (313) of the transistors (T).

25. The display apparatus according to claim 21, wherein the color filter layer (420) comprises more than three color filters and black matrices (410) disposed therein and corresponding to the sub-pixels (331, 332, 333, 334, 335, 336) of the different colors.

26. The display apparatus according to claim 17, further comprising:
an outer frame to support the liquid crystal panel; and
a backlight unit (600) disposed in the outer frame at a rear side of the liquid crystal panel to emit light into the liquid crystal panel, the backlight unit (600) including a light guide panel (620) at the rear side of the liquid crystal panel and having a shape that corresponds to the liquid crystal panel,
at least one lamp (610) disposed adjacent to at least one end of light guide panel (620) to emit light into the at least one end of the light guide panel (620),
a diffusion plate (630) disposed between the light guide panel (620) and the liquid crystal panel to diffuse light from the light guide panel (620) into the liquid crystal panel, and
a reflection sheet (640) disposed at a rear side of the light guide panel (620) to reflect any light that propagates away from the liquid crystal panel back toward the liquid crystal panel.

27. The display apparatus according to claim 16, wherein the display panel comprises an organic light emitting diode (OLED) panel, the OLED panel including:
a substrate (301);
an organic light emitting layer (308) disposed on the substrate (301) to emit light when one or more predetermined voltages are applied thereto and having portions that correspond to each of the more than three sub-pixels (331, 332, 333, 334, 335, 336) in each pixel (330);
first electrodes (309) disposed on the organic light emitting layer (308) in each of the sub-pixels and being made of a transparent material; and
second electrodes (332, 333) disposed between the substrate (301) and the organic light emitting layer (308) opposite the first electrodes such that the first and second electrodes apply the one or more predetermined voltages to each of the more than three sub-pixels of selected pixels.

28. A display apparatus, comprising:
a substrate;
a light emitting layer disposed on the substrate to emit light when one or more predetermined voltages are applied across the light emitting layer;
first and second electrode layers disposed on opposite sides of the light emitting layer, the light emitting layer and the first and second electrode layers defining at least one pixel including a red sub-pixel to emit red light having a first corresponding pair of electrodes, a green sub-pixel to emit green light having a second corresponding pair of electrodes, a blue sub-pixel to emit blue light having a third corresponding pair of electrodes, a cyan sub-pixel to emit cyan light having a fourth corresponding pair of electrodes, a magenta sub-pixel to emit magenta light having a fifth corresponding pair of electrodes, and a black sub-pixel having a sixth corresponding pair of electrodes.
